# EUROPEAN PATENT SPECIFICATION

(11) **EP 0 850 276 B1**
(45) Date of publication and mention of the grant of the patent: **11.07.2001**
(21) Application number: 96930153.0
(22) Date of filing: 02.09.1996
(51) Int. Cl.: C08L 95/00

(54) **BITUMEN COMPOSITIONS**
BITUMINÖSE ZUSAMMENSETZUNGEN
COMPOSITIONS DE BITUME

(30) Priority: 06.09.1995 GB 9518223
(43) Date of publication of application: 01.07.1998
(73) Proprietor: ExxonMobil Chemical Patents Inc., Linden, NJ 07036-0710 (US)
(72) Inventor: DELME, Roger, B-1674 Bellingen (BE)
(74) Representative: Dew, Melvyn John
(86) International application number: EP9603853
(87) International publication number: WO9709385

(56) References cited:
- EP-A- 0 337 282
- EP-A- 0 340 210
- US-A- 3 303 149

## Description

### Field of the Invention

This invention relates to compositions comprising bitumen, ethylene acetate copolymer, radial styrene-butadiene-styrene copolymer and optional wax for use in moisture impermeable articles, such as waterproofing applications, i.e. roofing membranes, shingles, underground waterproofing, pond lining, and geomembrane applications.

### Background of the Invention.

Polymer modified bitumen has been used extensively for the production of waterproofing membranes for the last 20 years. These membranes are used to protect roofs, building basements and are also used as pond liners and geomembranes for disposal areas for items such as household waste. Two families of polymers dominate the polymer modified bitumen arena. These are 1) styrene-butadiene-styrene elastomers(SBS) and 2) atactic polypropylene plastomers(aPP).

Atactic plastomers are generally deficient at low temperatures and do not have an elastic memory to accommodate movements of the substrate. The advantages SBS polymers offer over atactic plastomers include good elastic behaviour over a broad range of both high and low temperatures. SBS modified bitumen products must be able to resist both the tendency to melt and flow at high temperatures produced by direct sunlight as well as resist freezing and cracking at low temperatures. Low temperature elasticity and flexibility is typically obtained by selecting the desired properties from different types of SBS polymers, i.e. high versus low molecular weight and linear versus radial polymer structure. However, resistance to flow is typically only obtained by selecting high molecular weight SBS having a radial or branched polymer structure. Hence most SBS modified bitumen for use in waterproofing applications is typically based upon high molecular weight SBS polymer having radial or branched structures, such as VECTOR 2411™, KRATON D 1184™, KRATON D 1186™, FINAPRENE 411™, FINAPRENE 411X™, CALPRENE 411™, SOL T 161 A™, SOL T 161 B™, SOL T 161 C™, OR SOLPRENE 411™.

A common technique used to apply roofing felt to a substrate is torching. Torching quickly softens the bitumen compositions and allows the easy application of the felt to the roof. Torching is dangerous however, because of the use of an open flame. Further, the various polymers (such as atactic polypropylene, and SBS) used to modify bitumen react differently to being torched. Atactic polypropylene based roofing membranes are reportedly easier to torch than bitumen compositions based upon SBS. Atactic polypropylene compositions, because of their lower viscosity above their softening point tend to flow and wet a substrate faster. SBS on the other hand is more viscous and does not actually melt when torched so it requires longer to flow and wet the substrate. This is referred to as a weldability problem in the industry. To address this problem some have tried to reduce the viscosity of SBS bitumen blends by reducing the polymer concentration, adding in plasticizers, by blending in polymers of lower molecular weights or by blending a radial SBS with a lower molecular weight linear SBS. See for example U.S. 4,196,115. All these solutions, however, negatively affect the behaviour of the bitumen composition at high temperatures. The resistance to flow is reduced overall making the bitumen composition unsuitable for "all weather" uses, and especially unsuitable for hot weather uses. While some reduced viscosity SBS based bitumen compositions can retain enough elastic memory to be useful, they still suffer from the reduced weldability problem. For example, EP 337 282 blends filler, bitumen, linear SBS and ethylene vinyl acetate for roofing materials, yet this composition still suffers from poor resistance to flow and reduced viscosity. In contrast when, according to the invention herein, radial or branched SBS copolymers are blended with EVA, the loss in resistance to flow is significantly less steep and the effects on viscosity are greater.

### Brief Description of the Invention

This invention relates to bituminous compositions comprising bitumen, copolymers of ethylene and an ethylenically unsaturated ester (such as ethylene acetate copolymers), radial or branched monovinylaromatic/ conjugated diene copolymers, (such as styrene-butadiene-styrene or styrene-isoprene-styrene copolymers) and optional wax for the manufacture of moisture impermeable products, including but not limited to waterproofing products, such as roofing membranes, shingles, underground waterproofing membranes, pond lining, carpet backing, geomembranes and the like.

### Brief Description of the Drawings

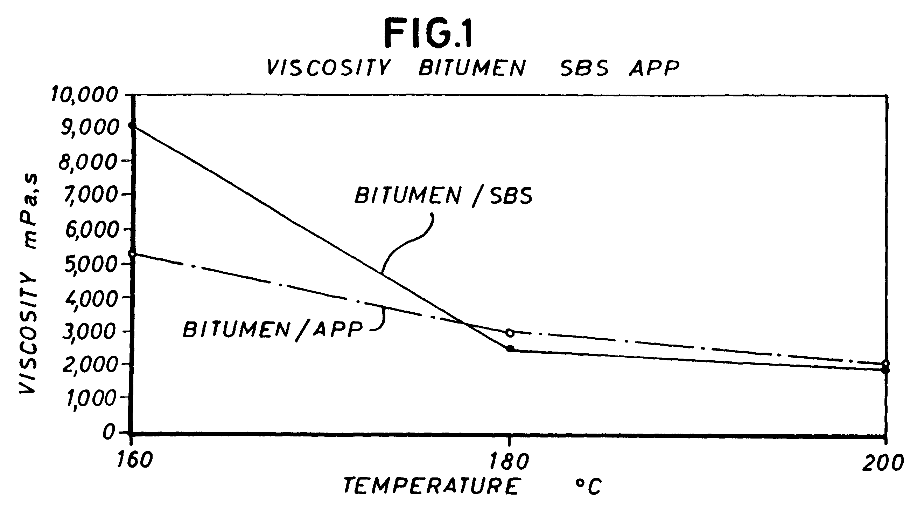

Figure 1 plots the typical viscosities of linear SBS/ bitumen blends and atactic polypropylene/bitumen blends versus temperature. (The SBS/bitumen blend was a blend of 97 wt% bitumen 180/120 and 13 wt % Vector 2411 having a Ring and Ball softening point of 128 °C. The atactic polypropylene/bitumen blend was a blend of 70 weight % bitumen 180/210 and 27 weight % atactic polypropylene, 3 wt% isotactic polypropylenehaving a Ring and Ball softening point of 156 °C.)

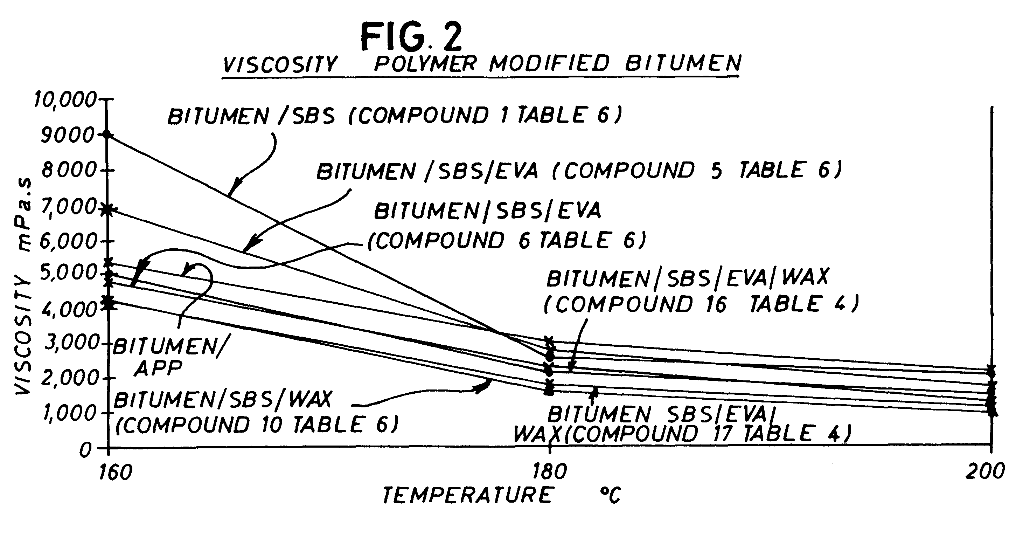

Figure 2 plots the viscosity versus temperature of several blends from the examples.

### Description of the Invention

In a preferred embodiment this invention relates to a composition comprising 70 to 90 weight percent, preferably 75 to 90 weight %, even more preferably 85 to 90 weight % of bitumen; 0.5 to 5 weight %, preferably 2 to 4 weight % of ethylene/ethylenically unsaturated ester copolymers; 5 to 20, preferably 6 to 13 weight % of radial or branched monovinylaromatic/conjugated diene copolymer; and up to 2 weight % of optional wax. All weight percent values are based upon the weight of the bitumen, the polymers and the optional wax.

The term bitumen as used in the present invention designates a variety of petroleum bitumen. Typical examples of petroleum bitumen are straight bitumen, blown, or semi-blown bitumen and propane precipitated bitumen and mixtures thereof. Preferred bitumen for use in this invention includes bitumen having a penetration in the range of 40 to 300 dmm, preferably 160 to 220 dmm, more preferably 180- 210 dmm. Penetration is measured at 25 °C according to ASTM D 5.

In a preferred embodiment the copolymer of ethylene and an ethylenically unsaturated ester is a copolymer of ethylene and a C₁ to C₂₀ ethylenically unsaturated ester group or derivative thereof. In a preferred embodiment the ethylenically unsaturated ester group is present in the copolymer at up to 40 weight %, more preferably 15 to 35 weight %, based upon the weight of the copolymer.
In another preferred embodiment copolymer of ethylene and an ethylenically unsaturated ester is a copolymer of ethylene and a C₁ to C₂₀ acetate group or derivative thereof. In a preferred embodiment the acetate group is present in the copolymer at up to 40 weight %, more preferably 15 to 35 weight %, based upon the weight of the copolymer. In a particularly preferred embodiment the ethylene acetate copolymer is an ethylene vinyl acetate copolymer having 27 to 33 weight % of the vinyl acetate group. In another particularly preferred embodiment the ethylene vinyl acetate copolymer comprises 28% vinyl acetate. In another preferred embodiment the copolymer of ethylene and an ethylenically unsaturated ester group (such as the ethylene acetate copolymer) has a melt index (MI) of 0 to 150 g/10min, preferably 40 g/10min or less, even more preferably between 25 and 3 g/10min, even more preferably between 7 and 3 g/10min as measured by ASTM D 1238, (condition 190 °C/2.16 g). Such copolymers are commercially available from Exxon Chemical Company under the trade name ESCORENE UL™.

In a preferred embodiment the radial or branched monovinylaromatic/conjugated diene copolymer is an ABA type radial or branched block copolymer, preferably an ABA radial or branched block copolymer of styrene butadiene styrene ("r-SBS"), having up to 40 % monovinylaromatic, preferably 20 to 35% of monovinylaromatic, preferably 28 to 32% of monovinylaromatic, even more preferably 30 % monovinylaromatic. In a preferred embodiment the monovinylaromatic/conjugated diene copolymer has a weight average molecular weight (Mw) of 180,000 or more, even more preferably 200,000 or more, even more preferably between 180,000 to 1,000,000, even more preferably between 180,000 and 250,000. Preferred monovinylaromatic monomers include styrene and substituted styrenes including but not limited to para-alkylstyrenes, such as para-methylstyrene, and alpha-alkyl styrenes, such as alpha-methyl styrene and the like.
Preferred conjugated dienes include any C₄ to C₃₀ conjugated diene, such as for example butadiene, isoprene and the like.

In a preferred embodiment the monovinylaromatic/conjugated diene copolymer is a radial or branched styrene-butadiene-styrene block copolymer (r-SBS) or a radial or branched styrene-isoprene-styrene block copolymer (r-SIS) having up to 40 % styrene, preferably 20 to 35 % styrene, even more preferably 28 to 32% of styrene, even more preferably 30 % styrene. In a preferred embodiment the r-SBS and/or the r-SIS has a weight average molecular weight (Mw) of 180,000 or more, even more preferably 200,000 or more, even more preferably between 180,000 to 1,000,000, even more preferably between 180,000 and 250,000. Suitable r-SBS copolymers are available from DEXCO Polymers under the trade name VECTOR™, from Shell under the trade name KRATON™, from Enichem under the tradename SOL T™, from Fina under the tradename FINAPRENE™, from Repsol under the tradename CALPRENE™, or from Negromex under the tradename SOLPRENE™. Particularly Preferred r-SBS polymers include VECTOR 2411™, KRATON D 1184™, KRATON D 1186™, FINAPRENE 411™, FINAPRENE 411X™, CALPRENE 411™, SOL T 161 A™, SOL T 161 B™, SOL T 161 C™, OR SOLPRENE 411™.

In a preferred embodiment wax is included in the formulation at up to about 2 weight %, based upon the weight of the composition. Useful waxes include petroleum derived synthetic waxes such as paraffin and/or microcrystalline waxes. Low molecular weight polyethylene and Fischer-Tropsch waxes are also useful. In a preferred embodiment the wax replaces a portion of the monovinylaromatic/conjugated diene copolymer and/or the EVA. Thus, in a preferred embodiment, the ethylene acetate copolymer, the monovinylaromatic/conjugated diene copolymer and the optional wax together comprise 10 to 25 weight percent of the composition, preferably 10 to 15 weight percent of the composition, based upon the weight of the total composition.

The composition of the bitumen, the ethylene acetate copolymer and the monovinylaromatic/conjugated diene copolymer may be combined by processes known in the art.
For example, mixing on an industrial scale can be done in a ten ton paddle mixer coupled to a high shear mixer. Because of the ethylene acetate copolymer's melting behaviour, in a preferred embodiment the monovinylaromatic/conjugated diene copolymer is added into the bitumen first and thereafter the ethylene acetate copolymer is blended in. The compositions described above can be used for moisture impermeable products and uses, such as water proofing membranes, barriers, geomembranes, carpet backing, and the like. Particularly the compositions described herein can be used as roofing layers, basement waterproofing membranes, bathroom and/ or kitchen waterproofing membranes and the like.

These membranes are typically applied to a substrate on a roof or in a building by flaming or otherwise heating the rolled composition to melt it and thereafter applying it to the substrate before the molten surface hardens. For landfill applications the membranes are laid loose but are welded at the joints to prevent leakage.

Of particular advantage is the fact that the compositions described herein have lower viscosities that conventional bitumen-SBS blends and viscosities equal to or lower than atactic polypropylene/bitumen compositions. Hence the instant compositions can be applied as fast as atactic polypropylene/bitumen compositions by hot flame torching or can be applied by hot air torching. The latter technique is of particular interest because it avoids the use of an open flame and reduces the risk of fire.

### Examples

### Materials used below were:

**Bitumen 180/210** is bitumen with a penetration of 195dmm at 25 °C and an Ring and Ball softening point on 39 °C.
**Bitumen 40/50** is bitumen with a penetration of 37 dmm at 25 °C and an Ring and Ball softening point on 5 °C.
**Vector 2518** is a linear styrene-butadiene-styrene copolymer("1-SBS") produced by Dexco having 31 % styrene and a melt flow rate (MFR*) of 6 g/10min as measured by ASTM D 1238. (MFR * is an MFR tested under the conditions of 200 ° C, 10kg and 0.156 inch die( 0.156 inches = 0.396 cm)
**Vector 2411** is a radial styrene-butadiene-styrene copolymer ("r-SBS") produced by Dexco having 30 % styrene and a solution viscosity (5 wt. % in toluene) of 22 mPa.s according to Dexco's method.
**Calprene 415** is an r-SBS produced by Repsol Quimica having 40 % styrene and a toluene solution viscosity ( 5.23 wt% in toluene) of 9.5 CST according to Repsol's method.
**Escorene UL 00328** is an ethylene vinyl acetate ("EVA") copolymer having 28 weight % vinyl acetate ("VA") and a melt index (MI) of 3 g/10min.
**Escorene UL 04028** is an EVA copolymer having 28 weight % VA and an MI of 40 g/10min.
**Escorene UL 00018** is an EVA copolymer having 18 weight % VA and an MI of 0 g/10min.
**Escorene UL 00220** is an EVA copolymer having 20 weight % VA and an MI of 2 g/10min.
**Escorene UL 00226** is an EVA copolymer having 26 weight % VA and an MI of 2 g/10min.
**Escorene UL 15028** is an EVA copolymer having 28 weight % VA and an MI of 150 g/10min.
**Escorene UL 04533** is an EVA copolymer having 33 weight % VA and an MI of 45 g/10min.
**Escorene UL 05540** is an EVA copolymer having 40 weight % VA and an MI of 55 g/10min.
**Escomer H-311** is a polyethylene synthetic wax with a softening point of 120 °C and a molecular weight (Mn) of 2500.

The following procedure was used to blend the compositions. Laboratory compounds were made in metal cans of about 10 cm in diameter by 20 cm in height. The cans were filled with between 550 and 600 grams of bitumen. The cans were then covered with aluminium foil and placed in an oven at 180 °C. When the bitumen reached 180 °C, the can was placed on an electrical heating plate and clamped to a Silverson high shear mixer (Silverson model L4R Laboratory mixer). The Silverson rotator was immersed in the hot bitumen and rotated at low speed. The polymers were then added incrementally. After 5 to 10 minutes all the polymers were added and mixing was continued at high speed until a good dispersion was reached (generally 45-60 minutes). At the end of mixing the composition temperature was about 220 °C
Viscosity was measured according to ASTM D 3236 with a Brookfield viscometer model RVTD.
Ring and Ball softening temperature was measured according to ASTM D 36.
Penetration was measured according to ASTM D5 at 25 °C & 50 ° C.
Flow resistance was measured according to the following procedure. A sample of the hot blend was poured into a mold (5 x 50 x 5 mm) placed on cardboard, then cooled and conditioned at room temperature. Then the mold was removed from the cardboard and the cardboard with the bitumen sample was then placed in a 100 °C oven on an incline having a 45 ° slope. The flow distance in millimeters of the sample was recorded after 2.5 hours, 5 hours, and 24 hours.
Tensile strength and elongation at break were measured according to ASTM D 412 on dumbells cut from a 2 mm thick compression molded bitumen sheet. The dumbells corresponded to ASTM D 4482 model, and BS 903, Part A2, Type 4.
Elastic recovery was measured using identical dumbells cut from a 2 mm thick compression molded bitumen sheet. The dumbells corresponded to ASTM D 4482 model, and BS 903, Part A2, Type 4. Each dumbbell was marked with two spots at 20mm distance. The dumbells were stretched until the distance between the two spots was 80 mm and were kept stretched for 24 hours at room temperature. After 24 hours the stretched dumbells were removed and placed on a talc covered paper so that the dumbells could recover without friction. The distance between the two spots was measured after 30 minutes and after 24 hours. The results are expressed as Elastic recovery (%) = (60-x/60) (100) where x is the measured distance in millimeters between the two spots minus 20 mm.
The higher the %, the better the elastic recovery of the tested samples. Low temperature flexibility was measured on 2mm thick compression molded sheet and tested according to DIN 52123. Temperatures at which the samples break are reported.
The results and the blend compositions are reported in the tables below.

**Table 1**

| ***Compound Ref*.** | ***1A**** | ***2*** | ***3*** | ***4*** | ***5*** | ***6*** |
|---|---|---|---|---|---|---|
| Bitumen 40/50 | 90 | 90 | 90 | 90 | 90 | 90 |
| Vector 2518 | **10** | 8 | 6 | | | |
| Vector 2411 | | | | **8** | 6 | **8** |
| Escorene UL 00328 | | 2 | 4 | **2** | 4 | |
| Escorene UL 04028 | | | | | | 2 |
| Viscosity, mPa.s | | | | | | |
| @ 150°C | **4520** | 4700 | 4750 | **9000** | **8220** | **7420** |
| @ 165°C | **2060** | 2185 | 2250 | **3365** | **3280** | **2140** |
| @ 180°C | **1150** | 1200 | 1140 | **1550** | **1480** | **830** |
| Ring & Ball temp, °C | **112** | 103 | 100 | **111** | 105 | **107** |
| Penetration @ 25°C, dmm | **28** | 30 | 28 | 30 | 30 | 28 |
| @ 50°C | 114 | 117 | 112 | 114 | 107 | 132 |
| Flow @ 70°C, mm | | | | | | |
| @ 2h30 | 0 | 0 | 1 | 0 | 1 | 2 |
| @ 5hrs | 0 | 1 | 2 | 1 | 2 | 3 |
| @ 24hrs | **1** | 2 | 6 | **2** | 4 | **5** |
| Flow @ 100° C, mm | | | | | | |
| @ 2h30 | **26** | 122 | 240 | **75** | 115 | **75** |
| @ 5hrs | **40** | 163 | >250 | **97** | 155 | **96** |
| @ 24hrs | **236** | >250 | >250 | **234** | >250 | **>250** |
| Tensile strength, MPa | 0.78 | 0.51 | 0.48 | 0.63 | 0.51 | 0.51 |
| Elongation at break, % | **>1400** | >1400 | 1080 | **>1400** | 1350 | **>1400** |

| | | | | | | |
|---|---|---|---|---|---|---|
| * Comparative | | | | | | |

**Table 2**

| ***Compound Ref.*** | ***1B**** | ***2B*** | ***3B*** | ***4B*** |
|---|---|---|---|---|
| Bitumen 180/210 | 85 | 85 | 85 | 85 |
| Vector 2518 | **15** | | | |
| Vector 2411 | | 12 | 10 | **10** |
| Escorene UL 00328 | | 3 | 5 | |
| Escorene UL 04028 | | | | **5** |
| Viscosity, mPa.s | | | | |
| @ 160°C | **7160** | 13500 | **11100** | **7420** |
| @ 180°C | **3400** | 5550 | **4300** | **2140** |
| @ 200°C | **1610** | 3250 | **1625** | **832** |
| Ring & Ball temp, °C | **110** | 125 | **111** | **108** |
| Penetration @ 25°C, dmm | 51 | 49 | 49 | 62 |
| @ 50°C | 131 | 127 | 123 | 160 |
| Low temperature flex., °C | -28 | -22 | -18 | -23 |
| Flow @ 100°C, mm | | | | |
| @2h30 | 28 | 6 | 28 | 75 |
| @5hrs | **41** | 7 | **41** | **101** |
| @24hrs | **128** | 21 | **114** | **213** |
| Elastic recovery, % | | | | |
| after ½ hr | **65** | 52 | **37** | **33** |
| after 24 hrs | **88** | 85 | **67** | **67** |
| Tensile strength, MPa | 0.64 | 0.67 | 0.46 | 0.32 |
| Elongation at break, % | >1400 | >1400 | 1350 | >1400 |

| | | | | |
|---|---|---|---|---|
| * Comparative | | | | |

**Table 3**

| ***Compound Ref*.** | ***1C**** | ***2C*** | ***3C*** |
|---|---|---|---|
| Bitumen 180/210 | 80 | 80 | 80 |
| Calprene 415 | 20 | 15 | |
| Vector 2411 | | | 15 |
| Escorene UL 00328 | | 5 | 5 |
| Viscosity, mPa.s | | | |
| @ 160°C | 35700 | 20500 | 60000 |
| @ 180°C | 9200 | 5200 | 24000 |
| @ 200°C | 3900 | 2250 | 8800 |
| Ring & Ball temp, °C | **130** | 116 | **130** |
| Penetration @ 25°C, dmm | 41 | 41 | 52 |
| @ 50°C | 88 | 85 | 93 |
| Low temperature flex., °C | -32 | -26 | -26 |
| Flow @ 100°C, mm | | | |
| @ 2h30 | **4** | 12 | **7** |
| @ 5hrs | **5** | 18 | **8** |
| @ 24hrs | **7** | 66 | **17** |
| Elastic recovery, % | | | |
| after ½ hr | **67** | 43 | **40** |
| after 24 hrs | **94** | 79 | **76** |
| Tensile strength, MPa | 1.42 | 0.74 | 0.76 |
| Elongation at break, % | 1370 | 1100 | 1130 |

| | | | |
|---|---|---|---|
| * Comparative | | | |

**Table 4**

| **Compound Reference** | **1*D**** | **11** | **16** | **17** | **6*D*** |
|---|---|---|---|---|---|
| **Bitumen 180/210** | 87 | 87 | **87** | **87** | 87 |
| **Vector 2411** | 13 | 9 | **9** | **9** | 10 |
| **Escorene UL 00328** | | 4 | **3** | **2** | |
| **Escorene UL 04028** | | | | | 3 |
| **Escomer H 311** | | | **1** | **2** | |
| **Viscosity, mPa.s** | | | | | |
| **@ 160°C** | 9040 | 6250 | **4800** | **4200** | 5000 |
| **@ 180°C** | 2470 | 2360 | **2240** | **1710** | 2100 |
| **@ 200°C** | 1918 | 1560 | **1210** | **1080** | 1425 |
| **Ring & Ball temp, °C** | 128 | 123 | **118** | **119** | 124 |
| **Penetration, dmm** **@ 25°C** | 51 | 47 | **46** | **48** | 51 |
| **@ 50°C** | 140 | 136 | **131** | **129** | 138 |
| **Low temp flexibility, °C** | -24 | -15 | **-17** | **-17** | -17 |
| **Flow @ 100°C, mm** | | | | | |
| **2h30** | 6 | 5 | **8** | **8** | 7 |
| **5 hrs** | 7 | 7 | **12** | **10** | 8 |
| **24 hrs** | 17 | 15 | **34** | **23** | 28 |
| **Elastic recovery, %** | | | | | |
| **after ½ h** | 70 | 63 | **50** | **58** | 68 |
| **after 24 hrs** | 97 | 90 | **82** | **88** | 95 |
| **Tensile strength, MPa** | 0.68 | 0.52 | **0.53** | **0.48** | 0.53 |
| **Elongation at break, %** | >1400 | >1400 | **>1400** | **>1400** | >1400 |

| | | | | | |
|---|---|---|---|---|---|
| * Comparative | | | | | |

**Table 5**

| **Compound Reference** | **1*D**** | **4*D*** | **11** | **12** | **6*D*** | **14** | **15** |
|---|---|---|---|---|---|---|---|
| **Bitumen 180/210** | **87** | 87 | **87** | 87 | **87** | 87 | 87 |
| **Vector 2411** | **13** | 10 | **9** | 8 | **10** | 9 | 8 |
| **Escorene UL 00328** | | 3 | **4** | 5 | | | |
| **Escorene UL 04028** | | | | | **3** | 4 | 5 |
| **Viscosity, mPa.s** | | | | | | | |
| **@ 160°C** | **9040** | 6850 | **6250** | 5000 | **5000** | 4760 | 3475 |
| **@ 180°C** | **2470** | 2725 | **2360** | 2250 | **2100** | 2150 | 1190 |
| **@ 200°C** | **1918** | 1665 | **1560** | 1150 | **1425** | 910 | 510 |
| **Ring & Ball temp, °C** | **128** | 125 | **123** | 111 | **124** | 109 | 98 |
| **Penetration, dmm** **@ 25°C** | **51** | 48 | **47** | 49 | **51** | 55 | 59 |
| **@ 50°C** | **140** | 134 | **136** | 148 | **138** | 154 | 169 |
| **Low temp flex, °C** | **-24** | -17 | **-15** | -17 | **-17** | -19 | -17 |
| **Flow @ 100°C, mm** | | | | | | | |
| **2h30** | **6** | 6 | **5** | 25 | **7** | 37 | 150 |
| **5 hrs** | **7** | 7 | **7** | 44 | **8** | 48 | 223 |
| **24 hrs** | **17** | 22 | **15** | 156 | **28** | 137 | >250 |
| **Elastic recovery, %** | | | | | | | |
| **after ½ h** | **70** | 58 | **63** | 52 | **68** | 55 | 37 |
| **after 24 hrs** | **97** | 91 | **90** | 82 | **95** | 87 | 74 |
| **Tensile strength, MPa** | **0.68** | 0.62 | **0.52** | 0.38 | **0.53** | 0.38 | 0.22 |
| **Elongation at break, %** | **>1400** | >1400 | **>1400** | >1400 | **>1400** | >1400 | 1230 |

| | | | | | | | |
|---|---|---|---|---|---|---|---|
| * Comparative | | | | | | | |

**Table 6**

| **Compound Reference** | ***1*D*** | 2*D* | 3*D* | 5*D* | **4*D*** | **6*D*** | 7 | 8 | 9 | *10 |
|---|---|---|---|---|---|---|---|---|---|---|
| **Bitumen 180/210** | **87** | 87 | 87 | 87 | **87** | **87** | 87 | 87 | 87 | 87 |
| **Vector 2411** | **13** | 10 | 10 | 10 | **10** | **10** | 10 | 10 | 10 | 10 |
| **Escorene UL 00018** | | 3 | | | | | | | | |
| **Escorene UL 00220** | | | 3 | | | | | | | |
| **Escorene UL 00226** | | | | 3 | | | | | | |
| **Escorene UL 00328** | | | | | **3** | | | | | |
| **Escorene UL 04028** | | | | | | **3** | | | | |
| **Escorene UL 15028** | | | | | | | 3 | | | |
| **Escorene UL 04533** | | | | | | | | 3 | | |
| **Escorene UL 05540** | | | | | | | | | 3 | |
| **Escomer H 311** | | | | | | | | | | 3 |
| **Viscosity, mPa.s** | | | | | | | | | | |
| **@160°C** | **9040** | 6200 | 8100 | 6850 | **6850** | **5000** | 5000 | 4950 | 4300 | 4200 |
| **@180°C** | **2470** | 2375 | 2770 | 2900 | **2725** | **2100** | 2305 | 2150 | 2000 | 1550 |
| **@200°C** | **1918** | 1150 | 1380 | 1275 | **1665** | **1425** | 1265 | 1225 | 925 | 900 |
| **Ring & Ball temp, °C** | **128** | 112 | 115 | 116 | **125** | **124** | 118 | 118 | 113 | 116 |
| **Penetration, dmm** **@ 25°C** | **51** | 53 | 51 | 51 | **48** | **51** | 55 | 55 | 63 | 52 |
| **@ 50°C** | **140** | 133 | 132 | 142 | **134** | **138** | 149 | 158 | 197 | 144 |
| | | | | | | | | | | |
| **Low temp flex, °C** | **-24** | -20 | -19 | -19 | **-17** | **-17** | -17 | -19 | -20 | -17 |
| **Flow @ 100°C, mm** | | | | | | | | | | |
| **2h30** | **6** | 50 | 49 | 18 | **6** | **7** | 10 | 10 | 27 | 7 |
| **5 hrs** | **7** | 76 | - | 35 | **7** | **8** | 17 | 16 | 34 | 9 |
| **24 hrs** | **17** | >250 | - | 120 | **22** | **28** | 51 | 60 | 75 | 31 |
| **Elastic recovery, %** | | | | | | | | | | |
| **after ½ h** | **70** | 53 | 55 | 53 | **58** | **68** | 60 | 67 | 60 | 67 |
| **after 24 hrs** | **97** | 90 | 91 | 90 | **91** | **95** | 91 | 95 | 88 | 95 |
| **Tensile strength, MPa** | **0.68** | 0.4 | 0.52 | 0.48 | **0.62** | **0.53** | 0.45 | 0.42 | 0.33 | 0.45 |
| **Elongation at break, %** | **>1400** | >1400 | >1400 | >1400 | **>1400** | **>1400** | >1400 | >1400 | >1400 | >1400 |

| | | | | | | | | | | |
|---|---|---|---|---|---|---|---|---|---|---|
| * Comparative | | | | | | | | | | |

**Table 7a**

| (AGEING 4 WEEKS AT 80°C) | | | | | | | | | | |
|---|---|---|---|---|---|---|---|---|---|---|
| **Compound Reference (same as table 6)** | 1 *D* (Comparative) | | 2*D* | | 3*D* | | 5*D* | | 4*D* | |
| **Polymer[s]** | **Vector 2411** | | UL 00018 | | UL 00220 | | UL 0226 | | **UL 00328** | |
| | * | ** | * | ** | * | ** | * | ** | * | ** |
| **Ring & Ball, °C** | **128** | **127** | 112 | 117 | 115 | 121 | 116 | 118 | **125** | **124** |
| **Penetration, dmm** **@ 25°C** | **51** | **33** | 53 | 32 | 51 | 28 | 51 | 30 | **48** | **28** |
| @ **50°C** | **140** | **99** | 133 | 98 | 132 | 85 | 142 | 89 | **134** | **90** |
| **Flow** @ **100°C, mm** | | | | | | | | | | |
| **2h30** | **6** | **6** | 50 | 10 | 49 | 8 | 18 | 9 | **6** | **7** |
| **5 hrs** | **7** | **8** | 76 | 20 | - | 13 | 35 | 14 | **7** | **11** |
| **24 hrs** | **17** | **55** | >250 | 118 | - | 83 | 120 | 86 | **22** | **71** |
| **Low temp flex, °C** | **-24** | **-12** | -20 | -15 | -19 | -15 | -19 | -15 | **-17** | **-12** |
| **Elastic recovery, %** | | | | | | | | | | |
| **after ½ h** | **70** | **23** | 53 | 18 | 55 | 22 | 53 | 23 | **58** | **23** |
| **after 24 hrs** | **97** | **65** | 90 | 55 | 91 | 55 | 90 | 63 | **91** | **65** |
| **Tensile str, MPa** | **0.68** | **0.84** | 0.4 | 0.6 | 0.52 | 0.62 | 0.48 | 0.61 | **0.62** | **0.87** |
| **Elong. at break, %** | **>1400** | **960** | >1400 | 510 | >1400 | 640 | >1400 | 750 | **>1400** | **1020** |

| | | | | | | | | | | |
|---|---|---|---|---|---|---|---|---|---|---|
| * Initial | | | | | | | | | | |
| ** 4 weeks @ 80°C | | | | | | | | | | |

**Table 7b**

| (AGEING 4 WEEKS AT 80°C) | | | | | | |
|---|---|---|---|---|---|---|
| **Compound Reference (same as table 6)** | 6*D* | | 8 | | 10 (Comparative) | |
| **Polymer[s]** | **UL 04028** | | UL 04533 | | H 311 | |
| | * | ** | * | ** | * | ** |
| **Ring & Ball, °C** | **124** | **123** | 118 | 118 | 116 | 120 |
| **Penetration, dmm** **@ 25°C** | **51** | **29** | 55 | 34 | 52 | 28 |
| **@ 50°C** | **138** | **103** | 158 | 110 | 144 | 109 |
| **Flow @ 100°C, mm** | | | | | | |
| **2h30** | **7** | **6** | 10 | 9 | 7 | 5 |
| **5 hrs** | **8** | **11** | 16 | 20 | 9 | 8 |
| **24 hrs** | **28** | **84** | 60 | 102 | 31 | 53 |
| **Low temp flex, °C** | **-17** | **-12** | -19 | -12 | **-17** | **-6** |
| **Elastic recovery, %** | | | | | | |
| **after ½ h** | **68** | **23** | 67 | 20 | 67 | 15 |
| **after 24 hrs** | **95** | **60** | 95 | 57 | 95 | 51 |
| **Tensile str, MPa** | **0.53** | **0.6** | 0.42 | 0.53 | 0.45 | 0.62 |
| **Elong. at break, %** | **>1400** | **700** | >1400 | 670 | >1400 | 960 |

| | | | | | | |
|---|---|---|---|---|---|---|
| * Initial | | | | | | |
| ** 4 weeks @ 80°C | | | | | | |

## Claims

1. A composition comprising:
70 to 90 weight percent of bitumen,
0.5 to 5 weight percent of an ethylene copolymer comprising ethylene and an ethylenically unsaturated ester,
5 to 20 weight percent of a radial and/or branched monovinylaromatic/conjugated diene copolymer, and
up to 2 weight percent of an optional wax, based upon the weight of the bitumen, the polymers and the optional wax.

2. The composition of claim 1 wherein the ethylene copolymer is an ethylene vinyl acetate copolymer and the monovinylaromatic/conjugated diene copolymer is a styrene-butadiene-styrene copolymer and/or a styrene-isoprene-styrene copolymer.

3. The composition of claim 1 or 2 wherein the ethylene copolymer has a melt index of 40 g/10min or less as measured by ASTM D 1238, conditions 190 °C and 2.16 g.

4. The composition of any of the above claims wherein the bitumen is present at 85-90 weight percent.

5. The composition of any of the above claims wherein the ethylene copolymer, the monovinylaromatic/conjugated diene copolymer and the optional wax together comprise 10 to 25 weight percent of the composition, preferably 10 to 15 weight percent of the composition, based upon the weight of the total composition.

6. The composition of any of the above claims wherein the ethylene copolymer is an ethylene vinyl acetate copolymer having 15 to 35 weight percent, preferably 27 to 33 weight percent vinyl acetate and a melt index of 3 to 25 g/10min as measured by ASTM D 1238, conditions 190 °C and 2.16 g.

7. The composition of any of the above claims wherein the monovinylaromatic/conjugated diene copolymer is present at 6 to 13 weight percent and the ethylene copolymer is present at 2 to 4 weight percent.

8. The composition of any of the above claims wherein the wax is present at 2 weight percent or less.

9. The composition of any of the above claims wherein the bitumen is present at 87 weight percent, the ethylene copolymer is present at 3 weight percent, and the monovinylaromatic/conjugated diene copolymer is present at 10 weight percent.

10. The composition of any of claims 1-8 wherein the bitumen is present at 87 weight % and the ethylene copolymer, the monovinylaromatic/conjugated diene copolymer and the wax are present at 13 weight %.

11. A moisture impermeable article comprising a composition of any of claims 1 - 10.

12. A roofing material comprising a composition of any of the above claims.

13. A barrier comprising a composition of any of claims 1 - 10.

14. A geomembrane comprising a composition of any of claims 1 - 10.

15. A process for applying a membrane comprising a composition of any of claims 1-10 comprising softening a surface of the membrane and applying the membrane to a substrate.

16. The process of claim 10 wherein the membrane is a roofing material and the membrane is softened by heat.

## Patentansprüche

1. Zusammensetzung, die
70 bis 90 Gew.% Bitumen,
0,5 bis 5 Gew.% Ethylencopolymer, das Ethylen und ethylenisch ungesättigten Ester umfasst,
5 bis 20 Gew.% radiales und/oder verzweigtes Monovinylaromat/konjugiertes Dien-Copolymer und
bis zu 2 Gew.% optionales Wachs umfasst, bezogen auf das Gewicht des Bitumens, der Polymere und des optionalen Wachses.

2. Zusammensetzung nach Anspruch 1, in der das Ethylencopolymer Ethylen/Vinylacetat-Copolymer ist und das Monovinylaromat/konjugierte Dien-Copolymer Styrol/Butadien/Styrol-Copolymer und/oder Styrol/Isopren/Styrol-Copolymer ist.

3. Zusammensetzung nach Anspruch 1 oder 2, in der das Ethylencopolymer einen Schmelzindex von 40 g/10 Min oder weniger aufweist, gemessen nach ASTM D 1238, Bedingungen 190°C und 2,16 g.

4. Zusammensetzung nach einem der vorhergehenden Ansprüche, in der das Bitumen zu 85 bis 90 Gew.% vorhanden ist.

5. Zusammensetzung nach einem der vorhergehenden Ansprüche, bei der das Ethylencopolymer, das Monovinylaromat/konjugiertes Dien-Copolymer und das optionale Wachs zusammen 10 bis 25 Gew.% der Zusammensetzung, vorzugsweise 10 bis 15 Gew.% der Zusammensetzung umfassen, bezogen auf das Gewicht der Gesamtzusammensetzung.

6. Zusammensetzung nach einem der vorhergehenden Ansprüche, in der das Ethylencopolymer Ethylen/Vinylacetat-Copolymer mit 15 bis 35 Gew.%, vorzugsweise 27 bis 33 Gew.% Vinylacetat und einem Schmelzindex von 3 bis 25 g/10 Min ist, gemessen nach ASTM D 1238, Bedingungen 190°C und 2,16 g.

7. Zusammensetzung nach einem der vorhergehenden Ansprüche, in der das Monovinylaromat/konjugierte Dien-Copolymer zu 6 bis 13 Gew.% vorhanden ist und das Ethylencopolymer zu 2 bis 4 Gew.% vorhanden ist.

8. Zusammensetzung nach einem der vorhergehenden Ansprüche, in der das Wachs zu 2 Gew.% oder weniger vorhanden ist.

9. Zusammensetzung nach einem der vorhergehenden Ansprüche, in der das Bitumen zu 87 Gew.% vorhanden ist, das Ethylencopolymer zu 3 Gew.% vorhanden ist und das Monovinylaromat/konjugiertes Dien-Copolymer zu 10 Gew.% vorhanden ist.

10. Zusammensetzung nach einem der Ansprüche 1 bis 8, in der das Bitumen zu 87 Gew.% vorhanden ist und das Ethylencopolymer, das Monovinylaromat/konjugierte Dien-Copolymer und das Wachs zu 13 Gew.% vorhanden sind.

11. Feuchtigkeitsundurchlässiger Gegenstand, der eine Zusammensetzung nach einem der Ansprüche 1 bis 10 umfasst.

12. Dachdeckmaterial, das eine Zusammensetzung nach einem der vorhergehenden Ansprüche umfasst.

13. Barriere, die eine Zusammensetzung nach einem der Ansprüche 1 bis 10 umfasst.

14. Geomembran, die eine Zusammensetzung nach einem der Ansprüche 1 bis 10 umfasst.

15. Verfahren zum Aufbringen einer Membran, die eine Zusammensetzung gemäß einem der Ansprüche 1 bis 10 umfasst, das das Weichmachen einer Oberfläche der Membran und das Aufbringen der Membran auf ein Substrat umfasst.

16. Verfahren nach Anspruch 10, bei dem die Membran Dachdeckmaterial ist und die Membran durch Wärme weich gemacht wird.

## Revendications

1. Composition comprenant :
70 à 90 % en poids de bitume, 0,5 à 5 % en poids d'un copolymère d'éthylène comprenant de l'éthylène et un ester à insaturation éthylénique,
5 à 20 % en poids d'un copolymère monomère monovinylaromatique / diène conjugué radial et/ou ramifié, et
jusqu'à 2 % en poids d'une cire facultative, sur la base du poids du bitume, des polymères et de la cire facultative.

2. Composition suivant la revendication 1, dans laquelle le copolymère d'éthylène est un copolymère éthylène-acétate de vinyle et le copolymère monomère monovinylaromatique / diène conjugué est un copolymère styrène-butadiène-styrène et/ou un copolymère styrène-isoprène-styrêne.

3. Composition suivant la revendication 1 ou 2, dans laquelle le copolymère d'éthylène a un indice de fluidité égal ou inférieur à 40 g/10 minutes mesuré suivant la norme ASTM D 1238, conditions : 190°C et 2,16 g.

4. Composition suivant l'une quelconque des revendications précédentes, dans laquelle le bitume est présent en une quantité de 85 à 90 % en poids.

5. Composition suivant l'une quelconque des revendications précédentes, dans laquelle le copolymère d'éthylène, le copolymère monomère monovinylaromatique / diène conjugué et la cire facultative, conjointement, représentent 10 à 25 % en poids de la composition, de préférence 10 à 15 % en poids de la composition, sur la base du poids de la composition totale.

6. Composition suivant l'une quelconque des revendications précédentes, dans laquelle le copolymère d'éthylène est un copolymère éthylène-acétate de vinyle comprenant 15 à 35 % en poids, de préférence 27 à 33 % en poids d'acétate de vinyle, et ayant un indice de fluidité de 3 à 25 g/10 minutes mesuré suivant la norme ASTM D 1238, conditions : 190°C et 2,16 g.

7. Composition suivant l'une quelconque des revendications précédentes, dans laquelle le copolymère monomère monovinylaromatique / diène conjugué est présent en une quantité de 6 à 13 % en poids et le copolymère d'éthylène est présent en une quantité de 2 à 4 % en poids.

8. Composition suivant l'une quelconque des revendications précédentes, dans laquelle la cire est présente en une quantité égale ou inférieure à 2 % en poids.

9. Composition suivant l'une quelconque des revendications précédentes, dans laquelle le bitume est présent en une quantité de 87 % en poids, le copolymère d'éthylène est présent en une quantité de 3 % en poids et le copolymère monomère monovinylaromatique / diène conjugué est présent en une quantité de 10 % en poids.

10. Composition suivant l'une quelconque des revendications 1 à 8, dans laquelle le bitume est présent en une quantité de 87 % en poids et le copolymère d'éthylène, le copolymère monomère monovinylaromatique / diène conjugué et la cire sont présents en une quantité de 13 % en poids.

11. Article imperméable à l'humidité comprenant une composition suivant l'une quelconque des revendications 1 à 10.

12. Matériau de revêtement de toiture comprenant une composition suivant l'une quelconque des revendications précédentes.

13. Barrière comprenant une composition suivant l'une quelconque des revendications 1 à 10.

14. Géomembrane comprenant une composition suivant l'une quelconque des revendications 1 à 10.

15. Procédé pour appliquer une feuille comprenant une composition suivant l'une quelconque des revendications 1 à 10, comprenant le ramollissement d'une surface de la feuille et l'application de la feuille à un substrat.

16. Procédé suivant la revendication 10, dans lequel la feuille est un matériau de revêtement de toiture et cette feuille est ramollie par la chaleur.
